# EUROPÄISCHE PATENTSCHRIFT

(11) **EP 3 463 927 B1**
(45) Veröffentlichungstag und Bekanntmachung des Hinweises auf die Patenterteilung: **29.04.2020**
(21) Anmeldenummer: 17726296.1
(22) Anmeldetag: 26.05.2017
(51) Int. Cl.: B60B 1/00, B60B 1/02, B60B 1/08, B60B 3/00, B60B 3/06, B60B 5/02

(54) **EINSTÜCKIG SPRITZGEGOSSENES LAUFRAD MIT HOHER STABILITÄT**
INTEGRALLY INJECTION-CAST IMPELLER HAVING HIGH STABILITY
ROUE MOTRICE MOULÉE D'UNE PIÈCE PAR INJECTION AYANT UNE GRANDE STABILITÉ

(30) Priorität: 03.06.2016 DE 102016110280
(43) Veröffentlichungstag der Anmeldung: 10.04.2019
(73) Patentinhaber: CIP Holding AG, 80331 München (DE)
(72) Erfinder: ZILLER, Daniel, 09474 Crottendorf (DE); BILZ, Anne, 09548 Seiffen (DE); BROBERG, Falk, 09474 Crottendorf OT Walthersdorf (DE); MESSNER, Francesco, 09456 Annaberg-Buchholz (DE); SÜSS, Jens, 09474 Crottendorf (DE); NESTLER, Falk, 09465 Sehmathal-Neudorf (DE); KOEHLER, Lars, 09474 Crottendorf (DE); BURKERT, Jürgen, 09474 Crottendorf (DE); PAPENFUSS, Andreas, 99423 Weimar (DE); STELZER, Robert, 09112 Chemnitz (DE); IWAN, Sebastian, 09112 Chemnitz (DE); VOGEL, Torsten, 09419 Thum-Herold (DE); SPIELER, Mirko, 09423 Gelenau (DE); NENDEL, Wolfgang, 09569 Schönerstadt (DE)
(74) Vertreter: Strehl Schübel-Hopf & Partner
(86) Internationale Anmeldenummer: PCT/EP2017/062741
(87) Internationale Veröffentlichungsnummer: WO 2017/207426

(56) Entgegenhaltungen:
- EP-A1- 0 754 570
- DE-U1- 29 915 952
- FR-A1- 2 505 264
- US-A1- 2014 239 705

## Beschreibung

Die vorliegende Erfindung betrifft ein äußerst stabiles Laufrad mit niedrigem Gewicht, das insbesondere für Fahrräder mit erhöhtem Systemgewicht wie beispielsweise elektrisch angetriebene Fahrräder und Lastenfahrräder geeignet ist, sowie ein Herstellungsverfahren dafür.

### Stand der Technik

Laufräder für verschiedene Fahrradtypen wie Mountainbikes, Alltagsräder Liegeräder, und dergleichen sind in verschiedensten Ausführungsformen und Materialien seit langem bekannt. Hinsichtlich der Speichenkonstruktion gibt es klassische Speichenräder aus Metall mit großer Speichenzahl, aber auch Laufräder mit stark reduzierter Speichenzahl, bei denen die einzelnen Speichen mit mehr Materialeinsatz konstruiert sind, um die nötige Stabilität zu gewährleisten. Letztgenannte Laufräder sind, wenn niedriges Gewicht und hohe Stabilität gewünscht sind, in der Regel in Carbon-Bauweise hergestellt. Die Carbon-Bauweise ist aber vergleichsweise teuer und aufwändig und findet daher hauptsächlich im Sportbereich Anwendung. Weiterhin ist die Stabilität gegenüber seitlichen Stoßbelastungen häufig unzureichend, wenn nicht besondere Gegenmaßnahmen getroffen werden.

In den letzten Jahren hat die Nutzung von Lasten- und Flottenfahrrädern sowie elektrisch angetriebener Fahrräder wie beispielsweise Pedelecs und E-Bikes stark zugenommen, wobei der Elektroantrieb gerade auch bei Lastenfahrrädern und Flottenfahrrädern Anwendung findet. Angesichts der höheren Geschwindigkeiten bei elektrisch angetriebenen Fahrrädern und aufgrund des erhöhten Gewichts bei Lastenfahrrädern sollten die Laufräder in der Lage sein, den dabei auftretenden erhöhten mechanischen Belastungen zu widerstehen. Die oben erwähnten Laufräder in Carbon-Bauweise sind zwar bei sorgfältiger Bauweise leicht und stabil, sind aber wie bereits erwähnt teuer und aufwändig in der Herstellung und sind weiterhin verbesserungsfähig im Hinblick auf die Absorption von Belastungen, die für Sporträder eher untypisch sind, wie beispielsweise seitliche Stoßbelastungen.

Die DE 29915952 U1 offenbart Laufräder für Zweiradfahrzeuge und die DE 3536308 A1 offenbart Laufräder, die insbesondere für Rollstühle geeignet sein sollen und dementsprechend eine hohe Biegefestigkeit aber auch Beständigkeit gegenüber Torsionsbelastungen aufweisen. Das Laufrad mit Nabe, Speichen und Felge ist einstückig aus Kunststoff gespritzt, wobei es sich bei den Speichen um Hohlspeichen handelt und die Speichen definierte Querschnittsabmessungen und einen definierten Querschnittsverlauf zeigen. Aus Kunststoff gespritzte Laufräder sind jedoch hinsichtlich der Stabilität verbesserungsfähig.

US 4,930,844, offenbart Laufräder, bei denen Nabe, Speichen und Felgenbett einstückig aus glasfaserverstärktem Polyamid gespritzt sind, die aber zur Gewährleistung einer ausreichenden Stabilität einen mit der Felge verbundenen Metallring aufweisen. Die Stabilität des aus glasfaserverstärktem Kunststoffmaterial gefertigten Laufrads alleine reicht hier offensichtlich nicht aus.

EP 1083063 A2 offenbart einstückig spritzgegossene Laufräder mit einem S-förmigen Speichenquerschnitt, die glasfaserverstärkt sein können. Es ist weiterhin eine Zunahme des Querschnitts der Speichen zur Nabe hin und eine Aufweitung der S-Form zur Nabe hin beschrieben. Weiterhin sind die Speichen im Bereich der Nabe sinusförmig miteinander verflanscht.

WO 2014/099197 A1 offenbart Methoden, den Windwiderstand von Fahrzeugrädern, beispielsweise Laufrädern von Fährrädern, zu verringern. Für Fahrrradlaufräder ist ein elliptisches Speichenprofil offenbart.

FR 2505264 A und EP 0754570 A1 offenbaren Räder Fahrzeuge, bei denen Nabe, Speichen und Felge einstückig ausgebildet sind.
US 2014/239705 A1 offenbart Räder, die eine Lauffläche aufweisen, welche recycelte Kunststoffe enthält.

Aufgabe der vorliegenden Erfindung ist es, stabile Laufräder bereitzustellen, die erhöhten mechanischen Belastungen wie sie insbesondere bei elektrisch angetriebenen Fahrräder und/oder Lastenrädern auftreten können standhalten, die ein akzeptables, möglichst niedriges Gewicht aufweisen und die kostengünstig und mit wenigen Verfahrensschritten in großer Stückzahl herstellbar sind. Die Laufräder sollen weiterhin möglichst langlebig und wartungsarm sein.

Diese Aufgabe wird erfindungsgemäß durch ein Laufrad gemäß Anspruch 1 gelöst, welches insbesondere für Fahrräder, Elektrofahrräder und Lastenräder geeignet ist, und welches eine Nabe, mindestens drei zur Radachse rotationssymmetrisch angeordnete Vollkörperspeichen und eine Felge aufweist, wobei der Körper aus Nabe, Speichen und Felge einstückig durch Spritzgießen aus einem glasfaserverstärkten thermoplastischen Kunststoff hergestellt ist, dadurch gekennzeichnet, dass
- die Speichen einen S-förmigen Querschnitt mit in Richtung der Felge zunehmendem Öffnungswinkel aufweisen,
- die Speichen sich im Radmittelschnitt (bzw. bei einer Draufsicht in Achsenrichtung des Laufrads) von der Felge zur Nabe hin verjüngen und
- die Speichen sich in einem mittig durch mindestens eine Speiche verlaufenden Radquerschnitt von der Nabe zur Felge hin verjüngen.

Weiterhin wird durch die vorliegende Erfindung ein Verfahren zur Herstellung des Laufrads bereitgestellt.

Die Erfinder haben umfangreiche Untersuchungen durchgeführt und festgestellt, dass bei der beschriebenen speziellen Speichenkonstruktion des Laufrads und Verwendung eines geeigneten glasfaserverstärkten thermoplastischen Kunststoffs überraschend eine hervorragende Stabilität des Laufrads erhalten und gleichzeitig das Gewicht des Laufrads niedrig gehalten werden kann. Insbesondere wurde hinsichtlich der Stabilität beobachtet, dass sowohl eine hohe vertikale Stoßbelastung toleriert wird, wie dies beispielsweise beim Durchfahren von Schlaglöchern, ggf. in Kombination mit hohem Systemgewicht, vorkommt. Ebenso wurden auch eine hohe Stabilität im Bereich der Nabe gegenüber Verformungskräften, die insbesondere beim Bremsen unter Verwendung von Scheibenbremsen auftreten, und eine hohe Seitenstabilität, d.h. gegenüber seitlich in der Nähe der Felge auf das Laufrad einwirkenden Kräften, die beispielsweise in Kurvenfahrten und bei Unfällen auftreten können, realisiert. Es war überraschend, dass diese Kombination von Stabilitätseigenschaften selbst bei relativ geringer Wandstärke der Speichen erzielt werden konnten. Das erfindungsgemäße Laufrad erfüllt somit hohe Sicherheitsanforderungen, die insbesondere für Lastenräder, elektrisch betriebene Fahrräder wie Pedelecs und E-Bikes vorteilhaft oder notwendig sind. Insbesondere ist das erfindungsgemäße Laufrad in einem Verfahrensschritt schnell und in hohen Stückzahlen herstellbar.

Das erfindungsgemäße Laufrad weist eine Nabe, mindestens drei zur Radachse rotationssymmetrisch angeordnete Vollkörperspeichen und eine Felge auf, wobei der Körper aus Nabe, Speichen und Felge einstückig durch Spritzgießen hergestellt ist. Das erfindungsgemäße Laufrad benötigt somit nicht eine metallische Verstärkung, beispielsweise im Bereich der Felge, sondern wird vollständig in einem Stück spritzgegossen. Die Anordnung der Speichen ist dabei bevorzugt so, dass alle Speichen den gleichen Abstand zu benachbarten Speichen aufweisen. Unter Vollkörperspeichen sind erfindungsgemäß Speichen zu verstehen, die keine Hohlspeichen sind. Allerdings ist es möglich, dass die erfindungsgemäßen Speichen zur Gewichtsverminderung Aussparungen oder Löcher aufweisen, an denen Material entfernt ist. Die Felge des erfindungsgemäßen Laufrads kann für Drahtreifen oder für Schlauchreifen ausgestaltet sein. Das für Drahtreifen erforderliche Felgenhorn mit Hinterschnitt kann beim Spritzgießen mit Hilfe von Schiebern bzw. Werkzeugteilen mit einfallendem Faltkern realisiert werden.

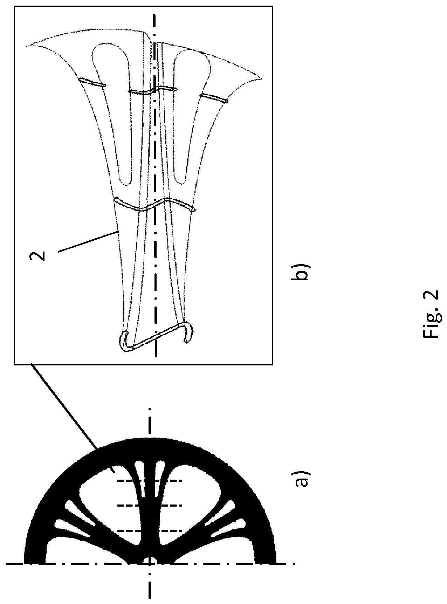

Wesentliches Merkmal der vorliegenden Erfindung ist die Gestaltung der Speichen mit einem einen S-förmigen Querschnitt mit in Richtung der Felge zunehmendem Öffnungswinkel (s. Fig. 2). Der S-förmige Querschnitt erlaubt eine Gestaltung der Speichen mit geringem Gewicht und trägt zur Stabilität des Laufrads bei. Mit "Sförmigem Querschnitt" sind erfindungsgemäß auch S-Formen umfasst, bei denen die Scheitelpunkte der S-Form leicht angekantet sind, wie in Fig. 2 b) angedeutet.

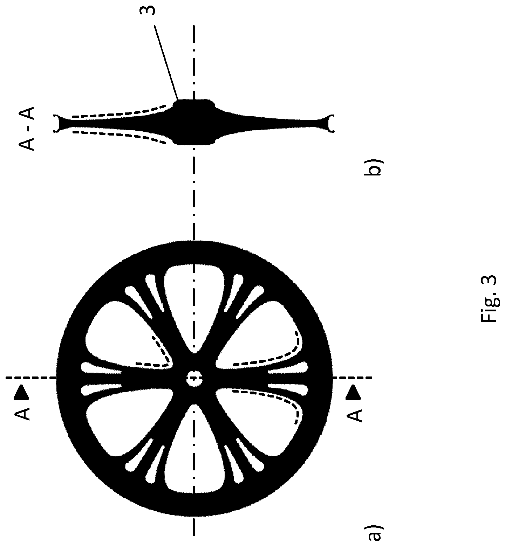

Weiterhin ist es erfindungsgemäß erforderlich, dass die Speichen sich im Radmittelschnitt von der Felge zur Nabe hin verjüngen. Unter "Radmittelschnitt" ist erfindungsgemäß ein Querschnitt durch das gesamte Laufrad in der Mitte desselben zu verstehen. Die Verjüngung ist ebenso bei einer senkrechten seitlichen Draufsicht in Richtung der Laufradachse erkennbar (s. Fig. 3 a)).

Weiterhin weisen die Speichen in einem durch die Speichen verlaufenden Radquerschnitt von der Nabe zur Felge hin eine Verjüngung auf. Genauer handelt es sich bei dem Radquerschnitt hier um einen durch die Radachse verlaufenden Schnitt senkrecht zur Hauptebene des Laufrads, wobei der Schnitt mittig durch mindestens eine Speiche verläuft. Anders ausgedrückt weisen die Speichen erfindungsgemäß von der Felge zur Nabe hin eine Verbreiterung in Richtung der äußeren Nabenenden auf. Die Verjüngung im Radquerschnitt von der Nabe zur Felge hin ist in Fig. 3 b) erkennbar, die einen Schnitt entlang A-A in Fig. 3 a) zeigt.

Durch die Kombination dieser Speichenkonstruktionsmerkmale konnten einstückige Laufräder mit hervorragender Stabilität bei geringem Gewicht durch Spritzgießen bereitgestellt werden, ohne dass eine aufwändige Carbonbauweise angewandt werden musste.

Das erfindungsgemäße Laufrad weist bevorzugt 3 bis 8, weiter bevorzugt 5 oder 6 Speichen, noch bevorzugter genau 6 der beschriebenen Speichen auf. Insbesondere bei einer Speichenzahl von 6 wurden hervorragende Ergebnisse hinsichtlich der Stabilität bei akzeptabel niedrigem Gewicht erzielt.

Die Speichen des erfindungsgemäßen Laufrads weisen bevorzugt eine Wandstärke im Bereich von 1,5 bis 5 mm, weiter bevorzugt 2,5 bis 3,5 mm, auf. Es ist weiterhin bevorzugt, die Wandstärke der Speichen über den Speichenverlauf konstant oder weitgehend konstant zu halten. Eine Vergrößerung der Wandstärke der Speichen kann erfindungsgemäß aber im Bereich des Übergangs zur Felge und/oder zur Nabe erfolgen.

Zur weiteren Verbesserung der Stabilität des Laufrads sind die Übergänge zwischen den Speichen und der Felge und/oder Übergänge zwischen benachbarten Speichen im Bereich der Nabe bevorzugt stetig ausgestaltet (s. Fig. 3 a), gestrichelte Linien), so dass sich fließende Übergänge der Speichen zur Felge hin ergeben. Im Bereich der Nabe können die stetigen Übergänge auch als Verbrückungen zwischen benachbarten Speichen bezeichnet werden.

Das erfindungsgemäße Laufrad ist unter Verwendung eines glasfaserverstärkten thermoplastischen Kunststoffs hergestellt. Bevorzugt enthält der glasfaserverstärkte thermoplastische Kunststoff einen Glasfaseranteil von 35 bis 65 Gew.-%, weiter bevorzugt 40 bis 60 Gew.-%, noch bevorzugter 45 bis 55 Gew.-%. Bei den Glasfasern handelt es sich bevorzugt um sogenannte Langfasern mit einer Länge von mehr als 1 mm. In den genannten Mengenbereichen können einerseits gute mechanische Eigenschaften des Laufrads realisiert werden, andererseits ist eine Verarbeitung durch Spritzgießen selbst bei Ausbildung feinerer Formen z.B. der Felgengestaltung möglich. Es ist erfindungsgemäß bevorzugt, wenn die Fasern im Endprodukt nach dem Spritzgießen verworren und weitgehend nicht gleich orientiert sind.

Als thermoplastische Kunststoffmatrix kommen insbesondere Polyamide, Copolyamide und Gemische davon in Frage. Bevorzugt sind Kunststoffmatrices, die auf teilkristallinen Polyamiden und partiell aromatischen Polyamiden basieren. Beispiele für geeignete Polyamide und Copolyamide sind Polyamid 6, Polyamid 66, Poylamid 6I, Polamid 6X, Polyamid 6I/X und insbesondere Gemische davon wie Polyamid 66 in kombination mit Polyamid 6I/X.

Bevorzugt weisen die glasfaserverstärkten thermoplastischen Kunststoffe erfindungsgemäß eine Bruchspannung nach DIN EN ISO 527 von 100 MPa bis 300 MPa, bevorzugt 150 MPa bis 250 MPa, und ein E-Modul nach DIN EN ISO 527 von 6 GPa bis 30 GPa, bevorzugt 15 GPa bis 25 GPa, auf.

Geeignete glasfaserverstärkte thermoplastische Kunststoffe sind im Handel erhältlich, beispielsweise unter dem Handelsnamen Grivory® von der Firma EMS-Grivory, EMS Chemie AG, Schweiz).

In weiteren bevorzugten Ausführungsformen kann dem glasfaserverstärkten thermoplastischen Kunststoff zur Verbesserung der Sichtbarkeit ein reflektierendes Pigment zugesetzt werden, so dass man nach Extrudieren und Spritzgießen ein reflektierendes Laufrad erhält.

In bevorzugten Ausführungsformen der Erfindung weist das Laufrad in der Nabe weiterhin einen Metall- oder Kunststoffeinsatz zur Aufnahme einer Achse, eines Elektromotors (Nabenmotors), Nabendynamos und/oder einer Nabenschaltung auf, oder ein Radlager ist bspw. direkt in den Kunststoffkörper des Laufrads eingepresst. Die Herstellung des erfindungsgemäßen Laufrads durch Spritzgießen erlaubt es, auf einfache Weise einen solchen Einsatz oder Radlager in der Radnabe vorzusehen. Beispielsweise kann das Einbringen des entsprechenden Bauteils durch Einlegen desselben in das Werkzeug und Umspritzen erfolgen, oder das entsprechende Bauteil wird nach dem Spritzgießen mit dem Laufrad verbunden bzw. verpresst, bevorzugt unter Ausnutzung der Restwärme des spritzgegossenen Laufrads.

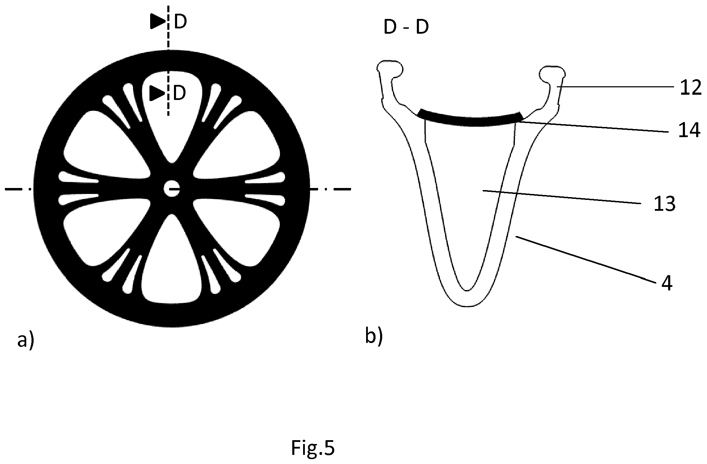

Das erfindungsgemäße Laufrad weist im Hinblick auf eine Gewichtsersparnis weiterhin bevorzugt eine Felgenkonstruktion auf, bei der die Felge in radialer Richtung nach außen ein zumindest teilweise offenes Hohlprofil aufweist (s. Fig.5 b)). Das Hohlprofil kann als V-förmiges, U-förmiges, trapezförmiges oder kastenförmiges Profil ausgestaltet sein. Die Profiltiefe kann bevorzugt 1 bis 80 mm betragen, weiter bevorzugt 15 bis 50 mm, ebenfalls bevorzugt 25 bis 35 mm.

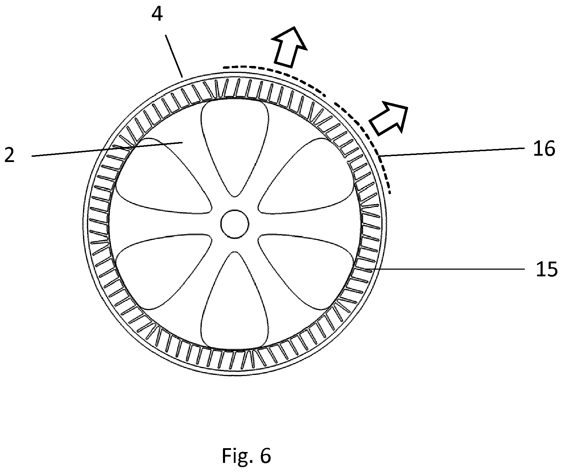

Das Hohlprofil kann vollständig geöffnet sein oder es kann zur Erhöhung der Stabilität durch Querrippen, die das Hohlprofil in Kammern unterteilen, unterbrochen sein (Fig. 6). Das Hohlprofil und das durch Querrippen unterbrochene Hohlprofil können durch radiales Herausziehen von hohlraumbildenden Werkzeugteilen beim Spritzgießen gebildet werden.

Die Querrippen weisen in der Mitte der Rippen bevorzugt eine Dicke von 1 mm bis 6 mm auf, weiter bevorzugt von 1,5 bis 4 mm, noch bevorzugter 2 bis 3mm, gemessen am äußeren Rippenrand. Weiterhin ist es bevorzugt, dass die Querrippen einen stetigen Übergang in die Felgenflanken aufweisen.

Das erfindungsgemäße Laufrad kann, insbesondere bei Gestaltung zur Verwendung mit Drahtreifen, mit einem Felgenband versehen werden. Das Felgenband liegt bevorzugt auf dem Hohlprofil oder dem durch Querrippen unterbrochenen Hohlprofil auf und stützt den Schlauch gegen den Reifendruck ab.

Das Felgenband ist bevorzugt aus thermoplastischen endlosfaserverstärkten Verbundstoffen (textilverstärktem Halbzeug mit thermoplastischer Matrix) gebildet und weist weiterhin bevorzugt eine Bruchspannung nach DIN EN ISO 527 im Bereich von 200 bis 600 MPa, bevorzugter 300 bis 400 MPa, und weist bevorzugt ein E-Modul nach DIN EN ISO 527 im Bereich von 6 GPa bis 30 GPa, bevorzugter 15 GPa bis 25 GPa, auf. Die Dicke des Felgenbands kann bevorzugt 0,25 bis 5 mm betragen, weiter bevorzugt 0,3 bis 1 mm, ebenfalls bevorzugt 0,4 bis 0,6 mm.

Besonders bevorzugt sind Ausführungsformen, bei denen die das Felgenprofil unterteilenden Querrippen in Segmente unterteilt sind, wobei die Rippen innerhalb der Segmente jeweils die gleiche radiale Ausrichtung aufweisen, also parallel zueinander verlaufen, und die Rippen in benachbarten Segmenten andere radiale Ausrichtungen aufweisen, aber innerhalb des Segments ebenfalls parallel zueinander ausgerichtet sind (Fig. 6). Überraschenderweise konnte dadurch eine weitere Stabilitätsverbesserung erzielt werden im Vergleich zu dem Fall, wo alle Querrippen die gleiche Orientierung aufwiesen. Weiter bevorzugt weist das erfindungsgemäße Laufrad 6 bis 12 Segmente dieser Segmente auf, noch bevorzugter 8 Segmente. Besonders bevorzugt ist erfindungsgemäß ein Laufrad mit 6 Speichen und 8 Segmenten, welches eine besonders gute Kombination aus Stabilität und Gewicht ergab.

Die erfindungsgemäßen Laufräder können in beliebigen üblichen Dimensionen und Felgendimensionen für Fahrräder und Lastenräder hergestellt werden wie sie beispielsweise von der ETRTO (European Tyre and Rim Technical Organisation) spezifiziert sind. In Anlehnung an die ETRTO-Spezifikationen sind bevorzugte Laufradnenndurchmesser solche die für Reifendimension von 16 bis 28 Zoll geeignet sind, bevorzugt 18 bis 26, weiter bevorzugt 20 bis 26 Zoll, am bevorzugtesten 24 Zoll. Die Felgenbreiten (Maulweite) sind bevorzugt 14 bis 35 mm, weiter bevorzugt 25 bis 30 mm. Im Fall von Drahtreifen sind die Felgenhornhöhen bevorzugt im Bereich von 5 bis 10 mm, weiter bevorzugt von 6 bis 8 mm.

Bei einer Größe für 24 Zoll-Reifen weisen die erfindungsgemäßen Laufräder je nach gewünschter Stabilität bevorzugt ein Gewicht im Bereich von 1 bis 2 kg, bevorzugter 1 bis 1,5, weiter bevorzugt 1 bis 1,2 kg auf. Das Gewicht bezieht sich dabei auf das Gewicht des Laufrads nach Spritzgießen ohne die oben beschriebenen eventuell vorhandenen Einsätze im Nabenbereich.

Die erfindungsgemäßen Laufräder können nicht nur für zweirädrige Fahrzeuge, sondern auch für drei- oder vierrädrige Fahrzeuge verwendet werden. Anwendungsgebiete erfindungsgemäßer Laufräder sind insbesondere E-Bikes, Lastenräder, Flottenräder, Pedelecs, Mountainbikes, Liegeräder oder Rollstühle, aber auch nicht durch Muskelkraft angetriebene Fahrzeuge wie Motorroller (Scooter). Aufgrund der guten Kombination aus Gewicht und Stabilität sind die erfindungsgemäßen Laufräder besonders bevorzugt für zwei- oder dreirädrige Lastenräder und elektrisch angetriebene Fahrräder wie E-Bikes oder Pedelecs geeignet. Die erfindungsgemäßen Anwendungen des Laufrads umfassen insbesondere auch Mittelmotor-getriebene Fahrzeuge und Allradfahrzeuge, bei denen in jeder Laufradnabe ein Nabenmotor vorgesehen ist.

Die Laufräder der vorliegenden Erfindung mit einer Nabe, mindestens drei zur Radachse rotationssymmetrisch angeordneten Vollkörperspeichen und einer Felge werden einstückig durch Spritzgießen unter Verwendung eines geeigneten thermoplastischen, glasfaserverstärkten Kunststoffs hergestellt. Dazu wird üblicherweise der thermoplastische, glasfaserverstärkte Kunststoff in einem Extruder verarbeitet und auf eine geeignete Temperatur gebracht und anschließend in die Form gespritzt. Dann werden üblicherweise die Hauptwerkzeugteile in Achsrichtung des Laufrads entfernt. Die S-förmige Querschnittsform der Speichen deren Ausgestaltung als Vollkörper erlaubte eine einfache und hinterschnittfreie Formung. Eine gegebenenfalls gewünschte Hohlprofilform der Felge, einschließlich ggf. vorhandener Querrippen, kann durch Verwendung geeigneter Werkzeugteile bzw. Schieber erhalten werden, die nach dem Spritzgießen radial herausgezogen werden.

Soll ein Radlager oder ein Metall- oder Kunststoffeinsatz zur Aufnahme einer Achslagerung und/oder eines Elektromotors in der Nabenöffnung vorgesehen werden, kann das entsprechende Bauteil beim Spritzgießen in der Form vorgelegt und umspritzt werden oder es wird nach dem Spritzgießen bevorzugt unter Ausnutzung der Restwärme des spritzgegossenen Teils in die Nabenöffnung gepresst.

Die vorliegende Erfindung wird nachfolgend ausführlicher unter Bezugnahme auf die anliegenden Zeichnungen beschrieben.
Fig. 1 zeigt eine seitliche Draufsicht auf ein erfindungsgemäßes Laufrad mit sechs Speichen.
Fig. 2 stellt den S-förmigen Querschnittsverlauf der Speichen dar. Fig. 2 a) zeigt einen Teil einen erfindungsgemäßen Laufrads und 2 b) eine genauere Darstellung einer Speiche mit hervorgehobenen Querschnitten, die den Positionen der gestrichelten Linien in Fig. 2 a) entsprechen.
Fig. 3 a) zeigt eine Draufsicht eines erfindungsgemäßen Laufrads in Achsenrichtung, wobei die Verjüngung der Speichen von der Felge zur Nabe hin erkennbar ist. Fig. 3 b) zeigt die Verjüngung der Speiche im Radquerschnitt von der Nabe zur Felge hin.
Fig. 4 a) zeigt eine Draufsicht eines erfindungsgemäßen Laufrads in Achsenrichtung. Fig. 4 b) zeigt schematisch ein Beispiel einer erfindungsgemäßen Gestaltung des Nabenbereichs mit eingefügtem Einsatz für eine Achslagerung, wobei der untere Teil von Fig. 4 b) einen Querschnitt des Nabenbereichs entlang der Linie B-B zeigt.
Fig. 5 a) zeigt eine Draufsicht eines erfindungsgemäßen Laufrads in Achsenrichtung und Fig. 5 b) zeigt eine mögliche Felgenprofilform als Querschnitt entlang der Linie D-D von Fig. 5 a).
Figur 6 zeigt insbesondere den Felgenbereich eines erfindungsgemäßen Laufrads mit durch Querrippen gebildeten Hohlkammern in einer Ausführungsform mit acht Segmenten, in denen die Querrippen parallel zueinander ausgerichtet sind.

Ausführungsbeispiele des Laufrads der vorliegenden Erfindung sind nachfolgend unter Bezugnahme auf die anliegenden Zeichnungen ausführlicher beschrieben.

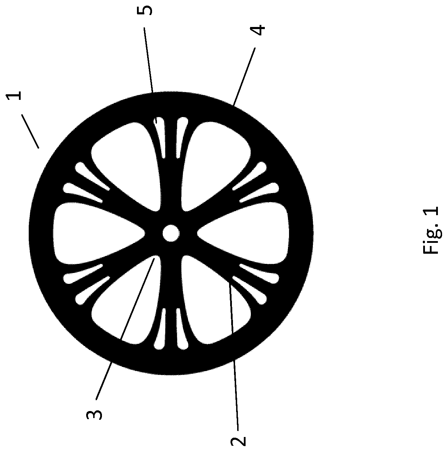

Ein Laufrad 1 wie in Fig. 1 gezeigt mit sechs S-förmigen Speichen 2, einer Nabe 3 und einer Felge 4 wurde durch Spritzgießen in einem Stück unter Verwendung eines geeigneten glasfaserverstärkten thermoplastischen Kunststoffs mit 50 % Glasfaseranteil (z. B. Grivory® GVN-5H 9915) in ein geeignetes Spritzgießwerkzeug und Entformen des Werkzeugs in Richtung der Radachse hergestellt. Das Laufrad kann mit einer für Drahtreifen mit Schlauch ausgestalteten Felge als auch mit einer Schlauchreifenfelge ausgestaltet sein. In der in Fig. 1 dargestellten Ausführungsform weisen die Speichen zur Gewichtsverminderung Löcher 5 auf.

Die Speichen 2 weisen einen S-förmigen Querschnitt mit in Richtung der Felge zunehmendem Öffnungswinkel auf (s. Fig. 2, insbesondere Fig. 2b)). Die Wanddicke beträgt in dieser Ausführungsform etwa 3 mm und ist von der Nabe zur Felge hin weitgehend konstant. Die Speichen 2 verjüngen sich im Radmittelschnitt von der Felge 4 zur Nabe 3 hin (Fig. 3 a)) und verjüngen sich in einem mittig durch mindestens eine Speiche 2 verlaufenden Radquerschnitt von der Nabe 3 zur Felge 4 hin (s. Fig. 3 b)). Zwischen den Speichen 2 im Bereich der Nabe 3 und im Bereich des Übergangs von Speichen 2 zur Felge 4 weisen die Speichen 2 einen stetigen Verlauf auf. Diese Übergänge sind in Fig. 3a durch gestrichelte Linien angedeutet.

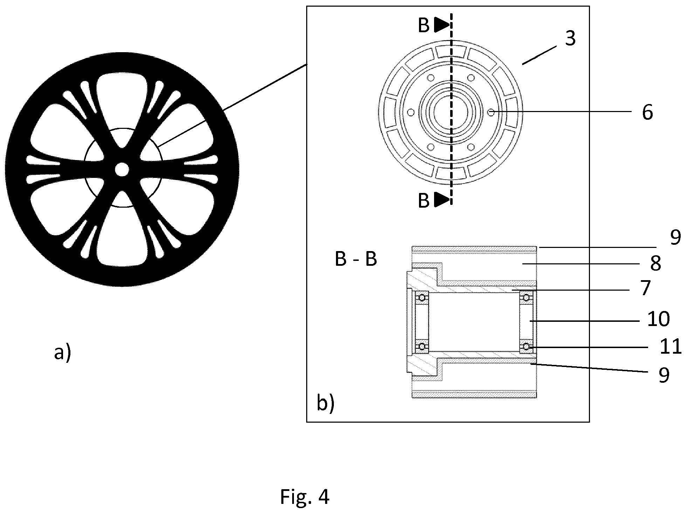

In Fig. 4 b) ist eine mögliche Ausgestaltung der Nabe 3 des erfindungsgenmäßen Laufrads mit einem Einsatz zur Aufnahme der Laufradachse dargestellt. Der Nabenbereich 3 ist mit Befestigungslöchern bzw. Bohrungen 6 zur Befestigung einer Bremsscheibe versehen. In dem Querschnitt entlang der Linie B-B ist der Einsatz erkennbar, welcher aus einem zylinderförmigen Träger 7 mit integrierten Kugellagern 11 gebildet ist. Der Einsatz ist in dem Laufrad 3 fest eingefügt und dient hier zur Aufnahme der Laufradachse, die durch die Öffnung 10 verläuft. Die Wände 9 des spritzgegossenen Laufrads umgeben einen Hohlraum 8, der zur Gewichtsverminderung vorgesehen ist. Im vorliegenden Beispiel ist die Wand 9, die mit dem Einsatz in Kontakt ist, für eine bessere Verankerung des Einsatzes in der Laufradnabe stufenförmig ausgebildet.
Beliebige andere Gestaltungen des Nabenbereichs 3 und des Einsatzes sind erfindungsgemäß möglich. Insbesondere kann auch ein Elektromotor im Nabenbereich vorgesehen sein.

Figur 5 zeigt eine mögliche Gestaltung des Felgenprofils des erfindungsgemäßen Laufrads. Fig. 5 b) zeigt einen Querschnitt entlang der Linie D-D von Fig. 5 a). Die Felge 4 ist hier mit einem durchgehenden Hohlraum 13 ausgestaltet. Im oberen Bereich der Felge 4 ist das Felgenhorn 12 dargestellt. Weiterhin ist ein dieser Ausführungsform ein Felgenband 14 vorgesehen, um eine Abgrenzung zum Druck des Reifenschlauchs vorzusehen.

Wie in Fig. 6 gezeigt ist, kann der Hohlraum 13 des Felgenprofils durch Querrippen 15 unterteilt sein, so dass der Hohlraum 13 in Kammern unterteilt wird. In der in Fig. 6 gezeigten bevorzugten Ausführungsform ist der Felgenbereich 4 durch Querrippen 15 als unterteiltes Hohlprofil mit acht Segmenten 16 ausgeführt. Innerhalb dieser Segmente 16 weisen die Querrippen die gleiche Ausrichtung auf, wobei die Ausrichtung der Querrippen 15 in den benachbarten Segmenten sich jeweils unterscheidet. Die einzelnen Segmente 16 können bei der Herstellung des Laufrads durch Vorlegen und Herausziehen von acht radial angeordneten Schiebern gebildet werden.

### Bezugszeichenliste

- 1: Laufrad
- 2: Speiche
- 3: Nabe, Nabenbereich
- 4.: Felge
- 5: Löcher
- 5: Loch
- 6: Befestigungsloch, Bohrung
- 7: Träger
- 8: Hohlraum
- 9: Wand
- 10: Öffnung für Achsaufnahme
- 11: Kugellager
- 12: Felgenhorn
- 13: Hohlraum Felge
- 14: Felgenband
- 15: Querrippe
- 16: Segment

## Patentansprüche

1. Laufrad (1), insbesondere für Elektrofahrräder und Lastenräder, mit einer Nabe (3), mindestens drei zur Radachse rotationssymmetrisch angeordneten Vollkörperspeichen (2) und einer Felge (4), wobei der Körper aus Nabe (3), Speichen (2) und Felge (4) einstückig durch Spritzgießen aus einem glasfaserverstärkten thermoplastischen Kunststoff hergestellt ist,
**dadurch gekennzeichnet, dass**
- die Speichen (2) einen S-förmigen Querschnitt mit in Richtung der Felge (4) zunehmendem Öffnungswinkel aufweisen,
- die Speichen (2) sich im Radmittelschnitt von der Felge (4) zur Nabe (3) hin verjüngen und
- die Speichen (2) sich in einem mittig durch mindestens eine Speiche (2) verlaufenden Radquerschnitt von der Nabe (3) zur Felge (4) hin verjüngen.

2. Laufrad nach Anspruch 1, wobei das Laufrad (1) 3 bis 8, bevorzugt 5 oder 6 Speichen (2) aufweist.

3. Laufrad nach Anspruch 1 oder 2, wobei die Speichen (2) eine Wandstärke im Bereich von 1,5 bis 5 mm, bevorzugt 2,5 bis 3,5 mm, aufweisen.

4. Laufrad nach einem der vorhergehenden Ansprüche, wobei Übergänge zwischen den Speichen (2) und der Felge (4) und/oder Übergänge zwischen benachbarten Speichen (2) im Bereich der Nabe (3) stetig ausgestaltet sind.

5. Laufrad nach einem der vorhergehenden Ansprüche, wobei die Nabe (3) weiterhin einen Metall- oder Kunststoffeinsatz zur Aufnahme einer Achse, eines Elektromotors, eines Nabendynamos und/oder einer Nabenschaltung aufweist, oder ein Radlager direkt in den Kunststoffkörper des Laufrads eingepresst ist.

6. Laufrad nach einem der vorhergehenden Ansprüche, wobei die Felge (4) in radialer Richtung nach außen ein zumindest teilweise offenes Hohlprofil (13) aufweist.

7. Laufrad nach Anspruch 6, wobei das Hohlprofil (13) der Felge (4) Querrippen (15) aufweist, welche das Hohlprofil (13) in Kammern unterteilen.

8. Laufrad nach Anspruch 7, wobei die Rippen in 6 bis 12 Segmente (16) eingeteilt sind, die Rippen (15) innerhalb der Segmente (16) jeweils die gleiche radiale Ausrichtung aufweisen und die Rippen (15) in benachbarten Segmenten (16) verschiedene radiale Ausrichtungen aufweisen.

9. Laufrad nach einem der vorhergehenden Ansprüche, wobei der glasfaserverstärkte thermoplastische Kunststoff einen Glasfaseranteil von 35 bis 65 Gew.-%, bevorzugt 40 bis 60 Gew.-%, weiter bevorzugt 45 bis 55 Gew.-% aufweist.

10. Laufrad nach einem der vorhergehenden Ansprüche, wobei der glasfaserverstärkte thermoplastische Kunststoff eine Bruchspannung nach DIN EN ISO 527 von 100 MPa bis 300 MPa, bevorzugt 150 MPa bis 250 MPa, und ein E-Modul nach DIN EN ISO 527 von 6 GPa bis 30 GPa, bevorzugt 15 GPa bis 25 GPa, aufweist.

11. Laufrad nach einem der vorhergehenden Ansprüche, wobei der glasfaserverstärkte thermoplastische Kunststoff aus teilkristallinem Polyamid und teilaromatischem Polyamid gebildet ist.

12. Laufrad nach einem der vorhergehenden Ansprüche, wobei das Laufradmaterial mindestens ein reflektierendes Pigment enthält.

13. Verfahren zur Herstellung eines Laufrads (1) mit einer Nabe (3), mindestens drei zur Radachse rotationssymmetrisch angeordneten Vollkörperspeichen (2) und einer Felge (4) nach einem der vorhergehenden Ansprüche, bei dem zur Bildung des Laufrads (1) ein geeigneter glasfaserverstärkter thermoplastischer Kunststoff in einem Stück spritzgegossen wird.

14. Verfahren nach Anspruch 13, bei dem weiterhin ein Radlager oder ein Metall- oder Kunststoffeinsatz zur Aufnahme einer Achslagerung und/oder eines Elektromotors in die Nabenöffnung eingebracht wird.

15. Verfahren nach Anspruch 14, wobei für das Einbringen des Radlagers oder des Einsatzes das entsprechende Bauteil umspritzt wird oder das entsprechende Bauteil unter Ausnutzung der Restwärme des spritzgegossenen Laufrads (1) mit dem Laufrad (1) verbunden wird.

## Claims

1. A wheel (1), in particular for electric bicycles and cargo bikes, comprising a hub (3), at least three solid-body spokes (2) arranged rotationally symmetric to the wheel axle, and a rim (4), wherein a body formed of the hub (3), the spokes (2) and the rim (4) is made in one piece by injection molding of a glass-fiber reinforced thermoplastic,
**characterized in that**
- the spokes (2) have an S-shaped cross-section with an opening angle which increases in the direction of the rim (4),
- the spokes (2) taper from the rim (4) towards the hub (3) in a central cross-section of the wheel, and
- the spokes (2) taper from the hub (3) towards the rim (4) in a wheel cross-section running through the center of least one spoke (2).

2. The wheel according to claim 1, wherein the impeller (1) has 3 to 8, preferably 5 or 6, spokes (2).

3. The wheel according to claim 1 or 2, wherein the spokes (2) have a wall thickness in the range of 1.5 to 5 mm, preferably 2.5 to 3.5 mm.

4. The wheel according to any one of the preceding claims, wherein transitions between the spokes (2) and the rim (4) and/or transitions between adjacent spokes (2) in the hub (3) portion are designed to be continuous.

5. The wheel according to any one of the preceding claims, wherein the hub (3) further comprises a metal insert or plastic insert for holding an axle, an electric motor, a hub dynamo and/or an internal gear hub, or a wheel bearing is pressed directly into the plastic body of the wheel.

6. The wheel according to any one of the preceding claims, wherein the rim (4) has a hollow profile (13) which is open at least partially towards the outside in the radial direction.

7. The wheel according to claim 6, wherein the hollow profile (13) of the rim (4) comprises transverse ribs (15) which partition the hollow profile (13) into chambers.

8. The wheel according to claim 7, wherein the ribs are classified into 6 to 12 segments (16), the ribs (15) within the segments (16) each have the same radial orientation, and the ribs (15) in adjacent segments (16) have different radial orientations.

9. The wheel according to any one of the preceding claims, wherein the glass-fiber reinforced thermoplastic material has a glass-fiber content of 35 to 65% by weight, preferably 40 to 60 wt.-%, more preferably 45 to 55 wt.-%.

10. The wheel according to any one of the preceding claims, wherein the glass-fiber-reinforced thermoplastic plastic has a tensile stress at break according to DIN EN ISO 527 of 100 MPa to 300 MPa, preferably 150 MPa to 250 MPa, and an E modulus according to DIN EN ISO 527 of 6 GPa to 30 GPa, preferably 15 GPa to 25 GPa.

11. The wheel according to any one of the preceding claims, wherein the glass-fiber-reinforced thermoplastic is composed of partially crystalline polyamide and partially aromatic polyamide.

12. The wheel according to any one of the preceding claims, wherein the wheel material comprises at least one reflective pigment.

13. A method for producing a wheel (1), comprising a hub (3), at least three solid-body spokes (2) arranged rotationally symmetric to the wheel axis, and a rim (4), according to one of the preceding claims, in which a suitable glass-fiber reinforced thermoplastic is used to injection-mold the wheel (1) in one piece.

14. The method according to claim 13, further comprising introducing a wheel bearing or a metal insert or plastic insert for holding an axle bearing and/or an electric motor in the hub opening.

15. The method according to claim 14, wherein the introduction of the wheel bearing or the insert is effected by injection-molding around the corresponding component, or the corresponding component is joined with the wheel (1) utilizing the residual heat of the injection-molded wheel (1).

## Revendications

1. Roue motrice (1) en particulier pour des bicyclettes électriques et des bicyclettes de transport, comprenant un moyeu (3) et au moins trois rayons massifs (2) disposés en symétrie de rotation par rapport à l'axe de la roue, et comprenant une jante (4), dans laquelle le corps composé du moyeu (3), des rayons (2) et de la jante (4) est fabriqué en une seule pièce par moulage par injection d'une matière plastique thermoplastique renforcée par des fibres de verre,
**caractérisée en ce que**
- les rayons (2) présentent une section transversale en forme de S avec un angle d'ouverture croissant en direction de la jante (4),
- les rayons (2) présentent un angle d'ouverture croissant en direction de la jante (4),
- les rayons (2) s'amincissent de la jante (4) vers le moyeu (3) dans une coupe centrale de la roue, et
- les rayons (2) s'amincissent du moyeu (3) jusqu'à la jante (4) dans une coupe transversale de la roue s'étendant au milieu à travers au moins un rayon (2).

2. Roue motrice selon la revendication 1, dans laquelle la roue motrice (1) présente de 3 à 8, de préférence 5 ou 6 rayons (2).

3. Roue motrice selon la revendication 1 ou 2, dans laquelle les rayons (2) présentent une épaisseur de paroi comprise dans la plage de 1,5 mm à 5 mm, de préférence de 2,5 mm à 3,5 mm.

4. Roue motrice selon l'une quelconque des revendications précédentes, dans laquelle des transitions entre les rayons (2) et la jante (4) et/ou des transitions entre des rayons voisins (2) sont toujours réalisées dans la région du moyeu (3) .

5. Roue motrice selon l'une quelconque des revendications précédentes, dans laquelle le moyeu (3) présente en outre un insert en métal ou en matière plastique, destiné à contenir un essieu, un moteur électrique, une dynamo de moyeu et/ou un circuit de moyeu, ou un palier de roue pressé directement dans le corps en matière plastique de la roue motrice.

6. Roue motrice selon l'une quelconque des revendications précédentes, dans laquelle la jante (4) présente un profil creux (13) ouvert au moins en partie en direction radiale vers l'extérieur.

7. Roue motrice selon la revendication 6, dans laquelle le profil creux (13) de la jante (4) présente des nervures transversales (15) qui divisent le profil creux (13) en chambres.

8. Roue motrice selon la revendication 7, dans laquelle les nervures sont divisées en 6 à 12 segments (16), les nervures (15) présentent à l'intérieur des segments (16) chaque fois la même orientation radiale et les nervures (15) présentent dans des segments voisins (16) des orientations radiales différentes.

9. Roue motrice selon l'une quelconque des revendications précédentes, dans laquelle la matière plastique thermoplastique renforcée par des fibres de verre présente une proportion de fibres de verre de 35 % à 65 % en poids, de préférence de 40 % à 60 % en poids, de préférence encore de 45 % à 55 % en poids.

10. Roue motrice selon l'une quelconque des revendications précédentes, dans laquelle la matière plastique thermoplastique renforcée par des fibres de verre présente une contrainte de rupture selon la norme DIN EN ISO 527 de 100 MPa à 300 MPa, de préférence de 150 MPa à 250 MPa, et un module E selon la norme DIN EN ISO 527 de 6 GPa à 30 GPa, de préférence de 15 GPa à 25 GPa.

11. Roue motrice selon l'une quelconque des revendications précédentes, dans laquelle la matière plastique thermoplastique renforcée par des fibres de verre est formée de polyamide partiellement cristallin et de polyamide partiellement aromatique.

12. Roue motrice selon l'une quelconque des revendications précédentes, dans laquelle le matériau de la roue motrice contient au moins un pigment réfléchissant.

13. Procédé de fabrication d'une roue motrice (1) comprenant un moyeu (3), au moins rois rayons massifs (2) disposés en symétrie de rotation par rapport à l'axe de roue et comprenant une jante (4) selon l'une quelconque des revendications précédentes, dans lequel, pour la formation de la roue motrice (1), on moule par injection en une seule pièce une matière plastique thermoplastique appropriée renforcée par des fibres de verre.

14. Procédé selon la revendication 13, dans lequel on place en outre dans l'ouverture du moyeu un palier de roue ou un insert en métal ou en matière plastique, destiné à contenir un coussinet d'essieu et/ou un moteur électrique.

15. Procédé selon la revendication 14, dans lequel, pour le placement du palier de roue ou de l'insert, on enrobe la pièce correspondante par projection ou on assemble la pièce correspondante à la roue motrice (1) en utilisant la chaleur résiduelle de la roue motrice moulée par injection (1).
